# EUROPEAN PATENT SPECIFICATION

(11) **EP 1 734 806 B1**
(45) Date of publication and mention of the grant of the patent: **12.03.2008**
(21) Application number: 05734859.1
(22) Date of filing: 29.03.2005
(51) Int. Cl.: A01F 15/07

(54) **A DEVICE FOR WRAPPING A BALE OF PASTURE OR THE LIKE**
VORRICHTUNG ZUM UMHÜLLEN EINES GRASBALLENS ODER DERGLEICHEN
DISPOSITIF POUR ENVELOPPER UNE BALLE DE FOIN OU SIMILAIRE

(30) Priority: 07.04.2004 IT RM20040176
(43) Date of publication of application: 27.12.2006
(73) Proprietor: Officine Meccaniche Ing. A Feraboli S.P.A., I-26100 Cremona (IT)
(72) Inventor: FERABOLI, Antonio, I-26100 Cremona (IT); CAGLIERI, Vanni, I-26100 Cremona (IT)
(74) Representative: Fiammenghi, Carlo
(86) International application number: PCT/IT2005/000172
(87) International publication number: WO 2005/096801

(56) References cited:
- EP-A- 1 400 163
- EP-B- 0 432 830
- DE-A1- 3 418 681
- DE-A1- 3 617 155

## Description

### Technical Field

The present invention relates to a wrapping device used for wrapping a bale of hay or the like, and which is mounted on a round baler.

### Background Art

EP-A-1 400 163 discloses a round baler according to the preamble of claim 1.

Generally at the end of the bale formation cycle, when the bale has reached a desired diameter, it is necessary that the round baler perform the wrapping of the bale of pasture or the like.

This wrapping or binding operation, as is well known to those skilled in the art and those who use round balers, is performed by means of a wire or by means of a sheet-like material (e.g. a net), while the bale is still inside the round baler. After the wrapping or binding, the bale is discharged on the ground from the tailgate. In modem round balers the whole process is essentially automatic, and the operator only needs to set the final (desired) bale diameter, possibly in combination with other parameters like the density of the bale etc.

As regards the binding systems which make use of a wire, they have been known long before, and they essentially include an arm which is movable between two positions, that is, a first position or rest position, and a second position or operative position in which the binding wire is inserted between two of the rollers that laterally enclose the bale formation chamber; the wire is thereafter frictionally drawn (dragged) between the bale and belts of the chamber (or alternatively, in some regions, between the rollers of this chamber and the bale). The wire will evidently be unwound (drawn) from a storage coil which acts as a storage means (reservoir).

This system for introducing the wire in the bale formation chamber and that will hereafter be called "direct binding means introduction system", was already known a long time ago, and it has been applied to a wrapping means - like a net or a plastic sheet - which uses the whole width of the baling chamber, by the company New Holland Belgium N.V. that has filed a corresponding European Patent application (publication number EP 0 432 830 B1) for such a system.

In this particular system applied by New Holland Belgium N.V. there is provided an element for the introduction of a net or the like, and this element is formed by a pair of arms capable of rotating between a first position and a second position, exactly in the same manner as in a system that makes use of a binding wire. In order to introduce the sheet (or net) directly into the baling chamber, there is provided a kind of pliers biased by springs and formed by transversal sheet metal parts mounted between said pair of arms; moreover, the metal sheet parts directly enter into the baling chamber, causing the loose end part of the plastic sheet or net to be frictionally dragged inside the bale formation chamber (baling chamber), in a manner which is already known to a skilled person from the binding system that utilises a wire.

A first disadvantage of employing this system is that the net or the like, which is dragged into the baling chamber, could possibly be damaged during its passage between the sheet metal parts, because it is subjected to sliding friction with the material of the sheet metal parts.

Unlike the binding system that makes use of a wire, the system which utilises a wrapping means (such as a net or a plastic film) that extends through the whole width of the baling chamber also has the problem of maintaining an outstretched condition of the net or plastic sheet, when the latter are unwound from the storage coil.

The cited European Patent application solves that problem by providing a particular indentation on the free edges of the sheet metal parts of the above mentioned pliers. The relative motion between the wrapping means and the sheet metal parts of the pliers, should then insure an outstretched condition, or at least contribute in maintaining this outstretched condition of the wrapping means. However, this relative movement could damage the net, as has already been highlighted.

From this point of the description on, and up to the claims, we shall only speak of a "net", although we shall generally mean by this any suitable means used for wrapping/binding, which makes use of the total width of the baling chamber, and which is apt to wrap and bind a bale.

The present invention specifically relates to a bale wrapping system to be used by a round baler and which operates according to a totally different way of introducing a net into the baling chamber of the round baler.

Therefore, a first object of the present invention consists in the realisation of an alternative device, or "indirect introduction system", for introducing the net inside the baling chamber.

According to the invention, one of the rollers that delimit the bale formation chamber (=baling chamber) will itself perform the function of feeding the net from the outside to the inside of the baling chamber. It is therefore unnecessary to provide any kind of pliers formed by two thin sheet metal pieces, in mutual contact with one another, wherein the pliers directly enter into the chamber. The device that dispenses the sheet or film will have a totally different configuration. Moreover, there are no risks at all to damage the net.

A second object of the present invention consists in the improvement of the system used for outstretching the net, disclosed in the foregoing European Patent. By using simple technical means, the dispensing system of the invention will become much more suitable for the task of outstretching the net in the transversal direction, as compared with the pliers system.

A further object of the present invention consists in providing a clever expedient in the net dispensing system, that allows to initially drag the net towards the interior of the baling chamber, without practically encountering any resistance from the net which is being dragged.

This facilitates the operation carried out by the roller used to feed the loose free end of the net into the baling chamber, since this roller will dispose of a slack (that is, not tensioned) section of the net, and can easily "recover" this section (or length) of the net in order to carry out its function.

### Disclosure of Invention

The objects of the present invention are obtained, as regards the round baler itself, by the characterising features of claim 1, and as regards the wrapping method, by the features contained in claim 17.

The dependent claims are used to illustrate some particular features of the device and of the relative method.

Essentially, the dispensing device used for dispensing the wrapping means includes a set of rollers that exert a gripping action on a loose free end of the net, and - unlike the solution adopted in the European Patent EP 0 432 830 B1 -, in the second position of the dispensing device the free end of the net is in contact with a first roller of the baling chamber, this first roller defining the insertion gap for the net together with a second roller of the baling chamber; moreover, said first roller of the baling chamber, also called feed roller, transports the net (or the like) towards the insertion gap, and successively inserts the net (or the like) inside the gap. This system, which at first sight might seem more complex than the solution given in the cited European Patent, insures the following:
a) the complete stretching of the net, until a moment immediately before its insertion (it will be enough to provide a spiralled roller also in the set of grip rollers);
b) the total integrity of the wrapping means (that is of a net or the like), since that wrapping means is no more forced to pass through two metal sheet parts.

Other very advantageous aspects of the present invention will result from the features contained in the dependent claims and from the detailed description given below.

### Brief Description of Drawings

The present invention, its advantages, and its diverse innovative features, will now be disclosed with reference to some particular embodiments, which are only illustrative and by no means binding or limitative, and which are shown in the drawings, wherein:
FIG. 1 schematically shows a lateral view of the wrapping device according to the present invention, in a first embodiment thereof, and in the rest or net-cutting position;
FIG. 2 is a lateral view analogous to Fig. 1, in which the wrapping device is in the net gripping position;
FIG. 3 is a lateral view analogous to Figs. 1 and 2, but with the wrapping device in the "operative" position, that is, during the wrapping operation itself;
FIG. 4 is a lateral and schematic view of the wrapping device according to the present invention, in a second embodiment, and in the rest position or net-cutting position;
FIG. 5 is a side view analogous to Fig. 4, which however refers to the approaching step, during which a motorised roller of the dispensing device is rotated;
FIG. 6 shows once again the wrapping device according to the second embodiment of the invention, but this time in the net-gripping position;
FIG. 7 is a sectional view, enlarged with respect to Figs. 4, 5, and 6, used to illustrate the details concerning three rollers of the dispensing device of the second embodiment, and the respective motorization of the central roller;
FIGS. 8, 9, 10 and 11 schematically show various positions of a variant of wrapping device according to the present invention, with regard to the second embodiment.

### Disclosure of Some Preferred Embodiments

Two specific embodiments of the present invention, together with a variant or modification of the second of these embodiments, will now be described extensively only for illustrative purposes and with the only aim to clarify how a technician in this field may concretely apply the principles of the invention.

Several aspects of the invention, which have not yet been mentioned, will result from this detailed description, while other aspects and advantages will be learned when the invention is put into practice.

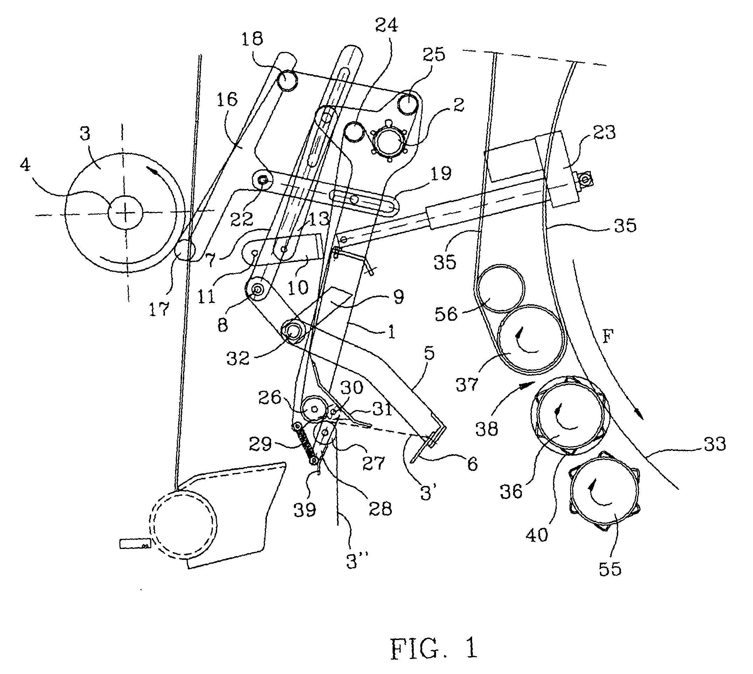

Referring first to Fig. 1, this figure shows the wrapping device of the invention according to the first embodiment, in the rest position. This figure is very schematic, and it only shows those parts which are necessary to understand the invention, whereas the remaining parts (which are standard in round balers) will be omitted altogether for simplicity since the skilled person is already aware of their existence. The wrapping device first includes a dispensing device 1, taking the form of a rocker lever, and including two arms that are pivotly mounted around the axis 2. In reality, the two arms of the rocker lever 1 may swivel around the outer side of two respective rings which are fixed to the respective opposite inner side walls of the round baler. On the inner part of these rings there are provided bearings for a transversal shaft 2, which extends between the rings, said transversal shaft being idly mounted in order to permit the advancement of the net.

Moreover, the wrapping device comprises a "reservoir", or storage means, for the net, which is formed of a tubular element 4 acting as a support and allowing rotation of a storage coil 3.

A cutting device 5 is also provided, which on its front part presents a series of cutting elements 6 and which is connected - at its opposite end - to the dispensing device 1 by means of a tie rod 7 ; the latter is hinged at 8 on one side of the inner space of the round baler. Actually, a skilled person immediately realises that each element 5 is also formed of two parts located on a respective side of the inner space of the round baler.

An attachment 9 is rigidly connected to an arm of the cutting device 5, in order to engage the hook 10, and the latter is pivoted at 11 to the respective side of the round baler. The hook 10, in an intermediate position thereof, which is indicated by 12, is connected to a second tie rod 13, which in turn is connected to the rocker lever 1 at its other end.

The cutting device 5 is pivotly mounted around a transversal axis 32 (meaning by this preferably two rings that are fixed to the respective inner walls, each of which is associated to one of the arms of the cutting device 5).

The two tie rods 7 and 13 have respective slots 14 and 15 at their linkage point of connection to the rocker lever 1.

The wrapping device of the present invention also includes a brake 16 which is biased by springs (not shown) against the storage coil 3 for the net, this brake also contributing to maintain an outstretched and tensioned condition of the net when the latter is wrapped around the bale, during the bale wrapping operation, also called "operative step" ("or working step").

This brake 16 too is formed of two respective lateral arms and it includes a nonrotating crosspiece 17 which frictionally engages the net 3 and which rigidly connects said lateral arms of the brake 16 to each other. The opposite end of the brake 16 is hinged to a transversal axis 18. A third tie rod, 19, connects in an articulated manner an intermediate point 22 of the brake 16 to a pin 20 of the rocker lever 1, this pin 20 being free to slide inside a slot 21 of the third tie rod 19. An electrically controlled linear actuator 23 is used to control the displacements of the dispensing device 1.

This solution is very advantageous, but it is obvious that other systems could be used as well in order to control the rotational movement of the dispensing device 1 in the clockwise and counter-clockwise directions around the axis 2.

Along its path through the dispensing device 1, starting from the storage coil of the net 3, the net 3 direction is changed many times by a plurality of rollers, some of which (see rollers 2 and 18) have already been mentioned. The two rollers 24 and 25 are integral with the two arms of the dispensing device 1, on the upper part of the rocker lever 1. The net length counting roller 2 (idle roller) determines, by means of an appropriate sensor, the distance covered by the net 3.

In the lower part, the dispensing device I includes two further rollers 26, 27. The roller 26 is directly and idly mounted on the dispensing device (rocker arm) 1, and it extends from one arm to the other. The roller 27 is mounted on a small lever 28 (one on each side, as usual), and said lever is pivoted on the respective arm 1 at a first end 30 thereof, while being at the same time biased by a spring 29 - at its opposite end - towards the arm 1, thereby obtaining the result of frictionally engaging the net that passes through the idle rollers 26, 27. A sheet (plate) 31 is fixed to the structure of the dispensing device 1, for exerting a protection action (see below) with respect to the roller 37 around which the belts, ribbons, elongated planks or the like are driven, since said roller rotates in the opposite direction with respect to the direction of introduction of the net in the bale formation chamber.

At the end of a bale wrapping cycle, the net cutting device 5 rotates clockwise around its axis 32, thereby cutting the net 3 (see FIG. 1, broken line 3') and leaving a free end of net 3'; the latter, by gravity, immediately falls in the position denoted by the continuos line 3". Thus, at the beginning of the next wrapping cycle, the free end 3" of the net hangs down and the whole wrapping device is in the rest position (which coincides with the net cutting position), ready for the next cycle.

A description will next be given of the operation of the wrapping device, which uses a net, according to this first embodiment of the present invention, the description being given with reference to the figures 1, 2 and 3.

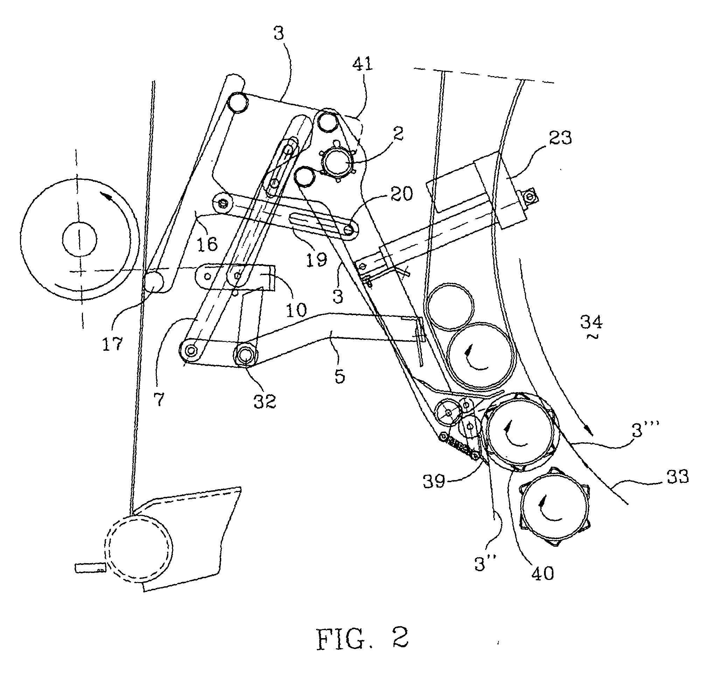

Once the bale 33 has reached the desired diameter within the baling chamber 34, while still continuing to rotate in the direction of arrow F due to the action of the ribbons 35 (rollers, or transversal rods 35 in other solutions), the electronic control unit of the round baler will supply electric current to the actuator 23 and this actuator will move the rocker lever 1 from its rest position (Fig. 1), to a position (Fig. 2) next to a roller 36 which bounds on the baling chamber, which roller, in combination with a second roller 37, defines a gap 38 used to introduce the net 3" inside the baling chamber 34.

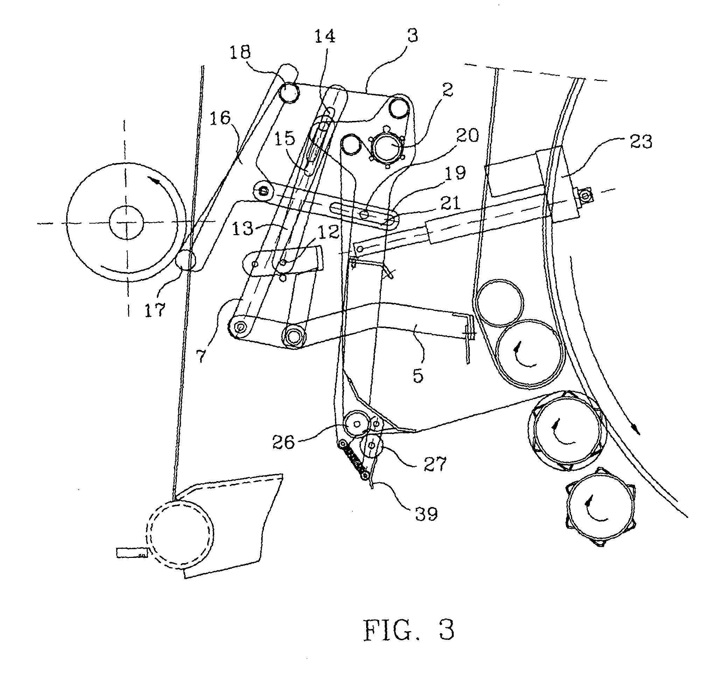

The free end 3" of the net (see Fig. 2), and a sheet or plate 39 (integral with the lever 28), engage the roller 36, and the latter transports the net towards the inside of the baling chamber 34. The rocker lever I moves the tie rod 19 which is connected with the brake 16, thereby disengaging the crosspiece 17 from the storage coil 3, so that the latter can freely rotate. At the same time, the rocker lever I moves the first tie rod 7 downwards, thereby reaching the end of the slot 14; in this way, the cutting device 5 rotates around the axis 32 and reaches the position of engagement to the hook 10 (Fig. 2). The net is transported by the roller 36 (that preferably has integral ribs 40) and is drawn towards the inside of the chamber by the same roller 36 and by the bale (see broken line 3"', which shows the free part of net 3 which becomes "trapped" between the roller 36 and the bale 33). The portion 41 of the net (see upper part of the rocker lever 1) which becomes loose during the rotation towards the position of Fig. 2, facilitates the traction exerted by the roller 36. The roller 2, which is driven into rotation by the movement of the net 3, will determine - by its sensor - the quantity of net that gets into the chamber 34. In this case, however, as soon as the roller 2 starts rotating , the actuator 23 will start moving in the opposite direction, thereby displacing the rocker lever 1 to the operative (working) position (see Fig. 3), which is defined by an electric sensor not shown in the drawings.

During the latter movement, the brake 16 is pushed by its springs (not shown) and returns to its position in abutment with the net 3 on the storage coil, in order to insure that the net 3 is in an outstretched condition on the bale. The rocker lever 1 remains in this position until the programmed length of net has been reached, as measured by the net length counting roller 2. At the end of this phase, the rocker lever 1, which is moved by the actuator 23, gets to the rest position (Fig. 1). During this movement, the second tie rod 13 moves the hook 10 in the anticlockwise direction and releases the attachment 9, and consequently, the cutting device 5, which, by rotating in the clockwise direction, will perform the cutting of the net 3, thereby leaving a net section 3' (3") which projects from the roller 27.

Fig. 2 illustrates the "net gripping" position, and it may be noted that the free end 3" is pushed by the sheet (plate) 39 against the roller 36 with ribs 40, and this roller carries out the insertion of the net 3 into the chamber 34.

In this context, the word "ribs" indicates any element different from a smooth roller, which is suited to enable the transport roller 36 to exert a drawing action.

Fig. 3 illustrates the position in which the net can be supplied into the chamber 34, also called operative or working position (or wrapping position), that comes before the return to the cutting position (Fig. 1).

It should be noted that normally the net length counting device 2 has a surface provided with spiral-like ribs, which are suited to stretch out the net 3. These spiral-like ribs may be formed either by added material or by removing material from the outer surface of the rollers.

These spiral-like ribs have opposite features (one of them is right-hand while the other is left-hand), and each of them extends only along half the length of the net length counting roller 2.

According to the present invention, the roller 26 will also have spiral-like ribs. This simple technical measure allows to maintain the net 3 in an outstretched condition, up to the last moment before it is fed into the baling chamber 34. This feature allows the rollers 26, 27 to exert a gripping and a stretching action on the net 3, which is more effective than that of the pliers of the prior art , and above all, without risks of damaging the net. Moreover, it may be seen that the free end 3", instead of being directly inserted through the gap 38 between the rollers 36 and 37, is simply drawn close to the roller 36, while the latter provides for its introduction through the gap 38. In Fig. 2, it may be noted, for instance, that the contact line between the free end 3" and the roller 36 (or one of its fins 40) is approximately shifted by an angle of about 90° with respect to the gap 38.

Another advantage with regard to the background art is that the brake 16 always keeps the net in a tensioned state during the binding (wrapping) of the bale, while it moves away from the storage coil 3 only for the time that is strictly required to carry out the insertion of the net inside the gap 38. A further advantage is due to the fact that the net portion 41, which remains loose (see Fig. 2), facilitates the introduction of the net, which is performed by the roller 36. This advantage is achievable by a particular configuration of the upper part of the rocker lever 1. The resistance to be overcome by the roller 36 during this initial phase is therefore totally negligible. Thus, it may be seen that this system differs substantially from the already known arrangements according to which the wrapping/binding means, e.g. a wire or a net, are directly introduced (inside the chamber 34).

A further essential simplification with regard to the structure of the wrapping device according to the present invention, as compared with the prior art, is that the cutting device 5 does not require a separate driving means, nor complex mechanisms for transmitting the motion; instead, it functions only with a hooking/ unhooking mechanism, and by interacting with the movement of the rocker lever which is controlled by the actuator 23.

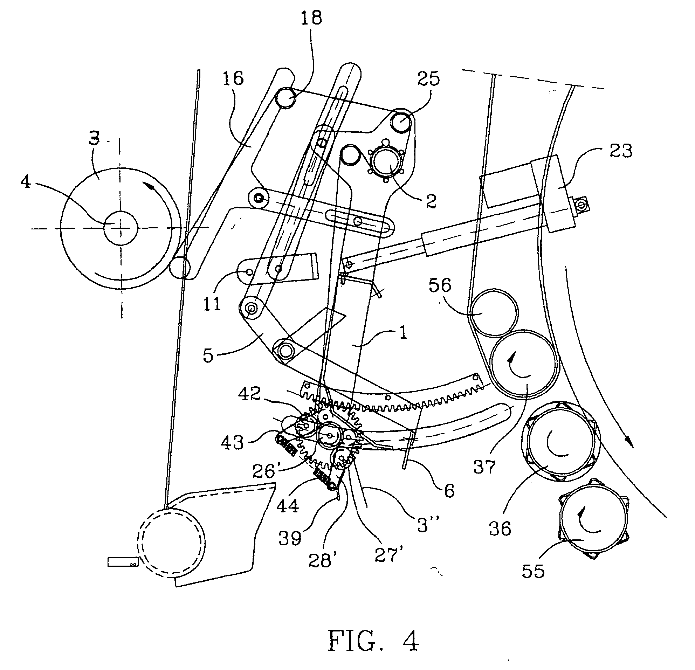

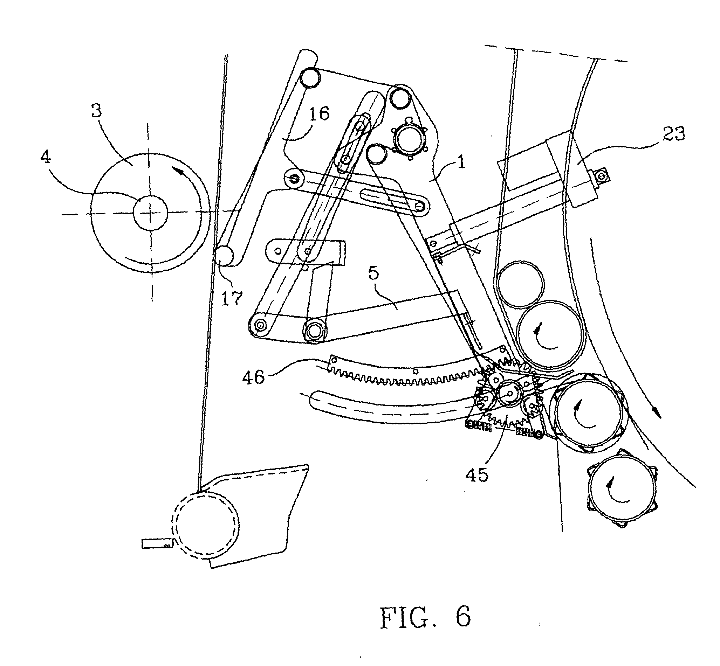

With reference to Figs. 4, 5, 6 and 7, we will now describe the second embodiment of the present invention.

This second embodiment differs from the first only in some features, so that the same reference numbers will be maintained as much as possible, except (obviously) for components that have no identical counterpart.

Nor will it be necessary to repeat the preceding description for identical parts that are already contained in the first embodiment.

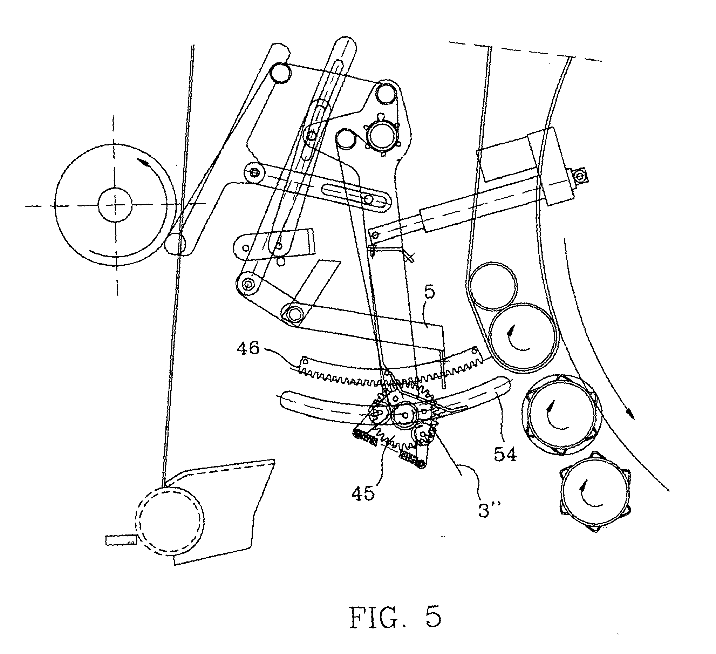

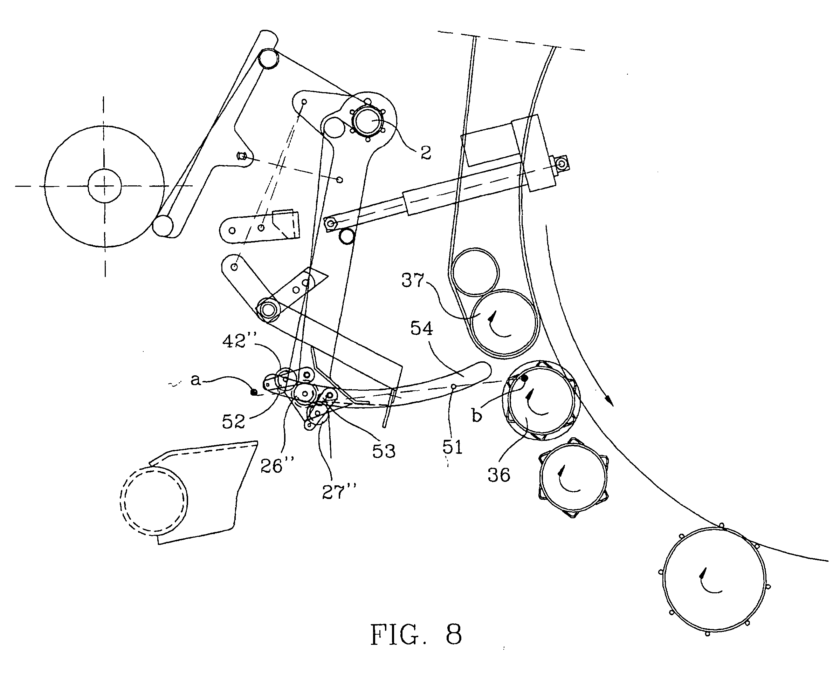

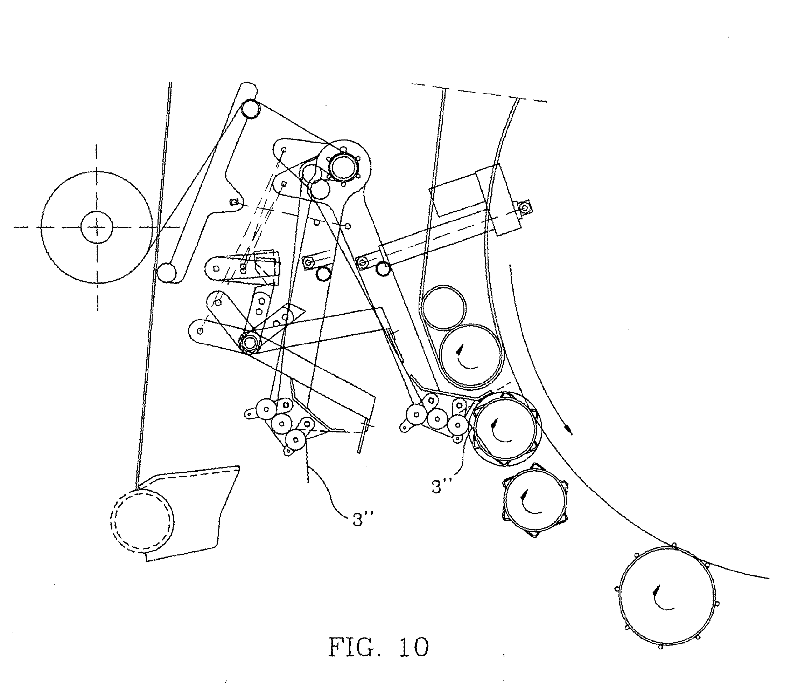

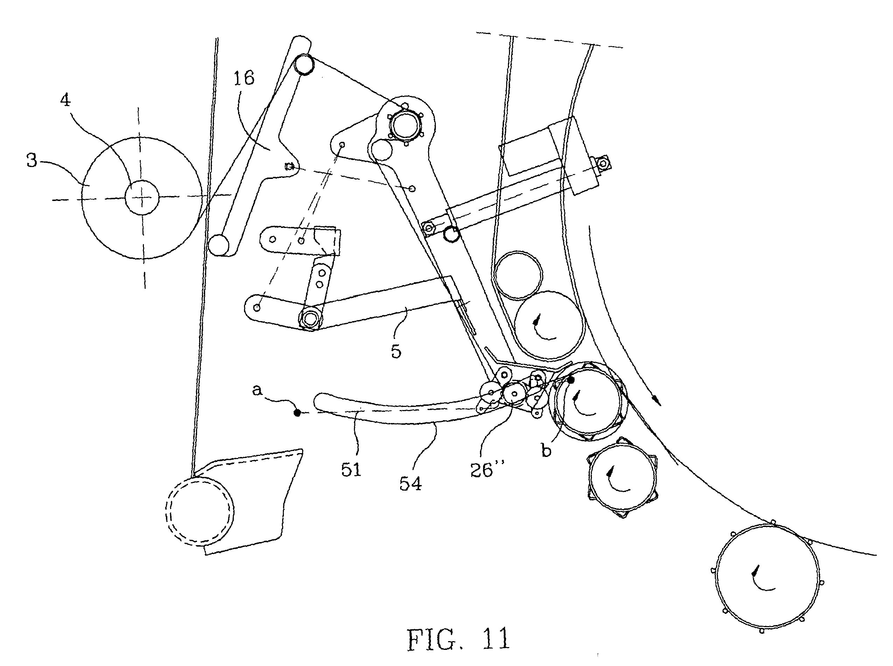

In this second embodiment, the lower part of the rocker lever 1 differs from the first embodiment in that besides the two rollers 26, 27 - in the present case denoted by 26', 27' - there is provided a third roller 42. Moreover, the roller 42 is idly mounted on a second lever 43 which is pivoted on the respective arm of the rocker lever 1, while a spring 44 (one for each arm of 1) connects the free end of the lever 43 to the free end of the lever 28'. The net 3 extends along a zigzag path between the three idle rollers 26', 27', 42. However, according to this embodiment, the central roller 26' is motorised. This means that during the rotational movement that causes the advancement of the rocker lever 1 towards the roller 36, the central roller 26' drags the net and gradually increases the length of the free end 3" (see Figs. 4 and 5). The means used to drive (motorise) the roller 26' may be of any kind, e.g. electric, hydraulic, or mechanical. In the present description we will only consider two (mechanical) types of drive means. Figs. 4 to 7 show a first kind of mechanical drive means (corresponding to the second embodiment of the invention), whereas Figs. 8 to 11 illustrate a second arrangement of mechanical drive means for the roller 26'' (corresponding to a variant of the second embodiment). However, it is obvious that these specific solutions for obtaining driving arrangements for the roller 26' (or 26"), are purely illustrative and are not intended to limit the invention, it being understood that a skilled person could choose among a vast number of alternative solutions.

The central roller 26' (Figs. 4 - 7) is driven by a gear wheel 45 which is integrally connected to the central roller 26', this gear wheel engaging a rack 46 integrally attached to the frame 47 of the machine, on the outer side of the latter (one for each side).

Thus, it may be realised that the shaft 48 of the roller 26' crosses the respective arm of the rocker lever I and is fixed (by a key or in any suitable manner) to a cylindrical part 49. Between the latter and the gear wheel 45 there is provided a device 50 (for instance a freewheel or sprag clutch), allowing the rotation of the roller 26' in one direction only (the anticlockwise direction indicated in Figs. 4 - 6).

Therefore, the operation is the same as already described for the first embodiment, and the rocker lever 1 will - as before - be able to occupy three positions, as has been detailed above, that is: rest (or cutting) position, net gripping position, operative position.

It should be noted that when the roller 26' is set into rotation by the net which is dragged by the bale, the gear wheel 45 remains stationary. When the rocker lever 1 moves towards the operative position (and after, towards the cutting position), the gear wheel 45 and the roller 26' rotate in opposite directions.

This second embodiment is an alternative (option) for the skilled person. In fact, the distance between the blades 6 of the cutting device 5 and the position of the rocker lever 1, at the time the net is cut, determines the length of the free end of the net (see Figs. 1 and 4). This distance must be selected to be greater in case of Fig. 1, since in the latter solution, during the approaching movement of the rocker lever 1, the length of the free end (of the net) does not increase. In case of Fig. 4, the said distance could be small, since the motorised roller 26' will insure an increase of the free end's length, by dragging (drawing) the net (and unrolling it from the coil 3). A possible alternative of the drive means of the roller, as shown in Figs. 8 to 11, will be briefly discussed.

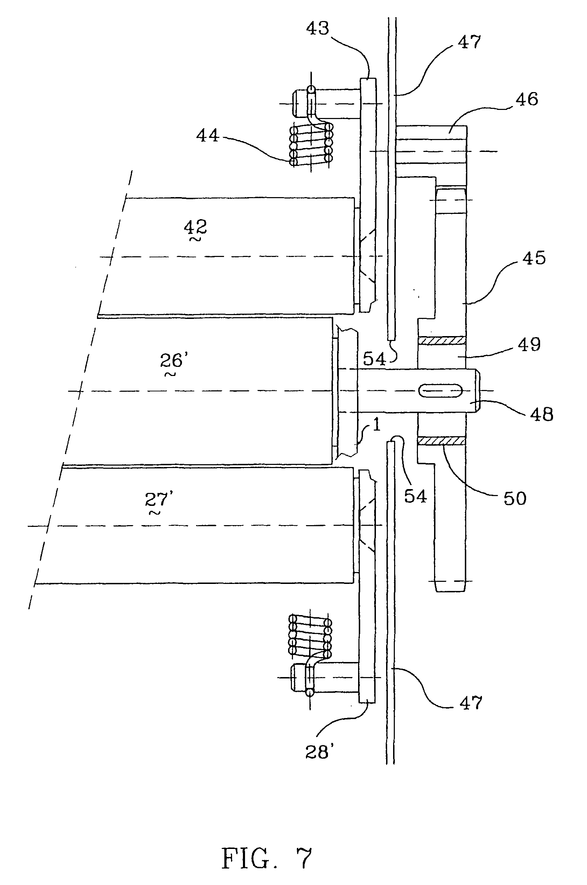

In this case, the extension (or shaft) of the roller 26" supports an external gear - which corresponds to the gear 45 of Fig. 7 -, and which, even in this case, is associated to a freewheel 50 or a similar device (with the same function). A chain 51 is fixed at the end points a and b, on the respective outer wall of the round baler. Two hubs, or pins, 52, 53, are rigidly fixed to the respective arm of the rocker lever 1, and they extend through the slot 54 that is obtained on the respective wall of the frame 47 of the round baler. The chain direction is changed by said rigid pins or hubs 52, 53, in such a way as to follow the contour of the gear wheel (analogous to 45) on its upper part, so that the chain will follow a zigzag path between the components 52, 53 and the gear wheel (analogous to the gear wheel 45).

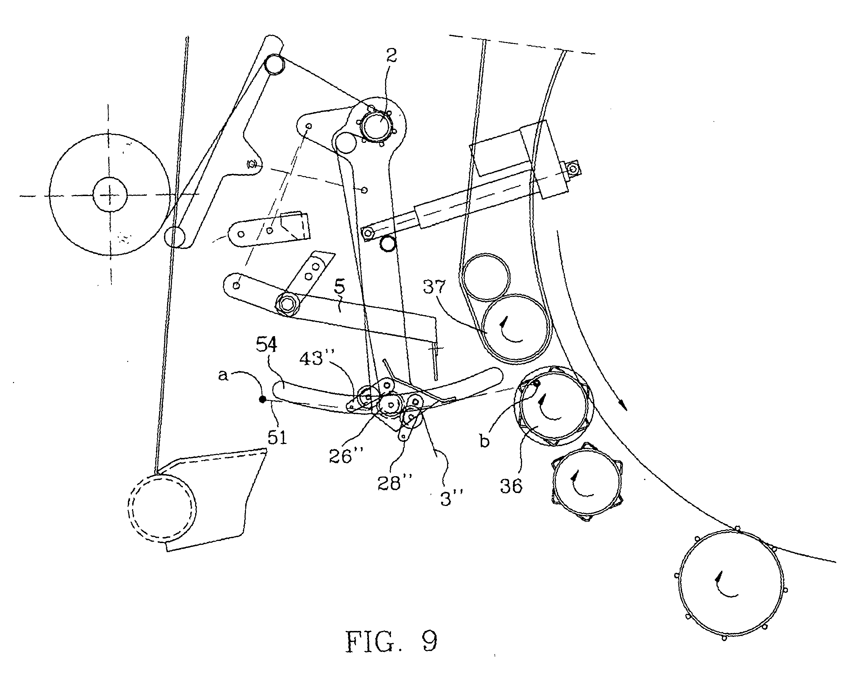

The two small levers analogous to 28', 43, are now indicated by numerals 28", 43" (Fig. 9).

In Fig 8 and in the following figures, it may be noted that the plate 39 of Fig. 2 and Fig. 4 has been omitted. Although not strictly necessary, this element 39 (that could even be made of plastics or any other suitable material) is in any case preferable, in order to push the net against the roller 36, thereby insuring - in a more reliable manner - that there is a contact between the net and the upper surface of the roller 36.

It should be noted that the roller 26" (driven roller) could be provided with helical ribs, in the same way as the net-length counting roller 2, or, alternatively, it could be rubber-coated in order to increase the friction with the other rollers 27' and 42. The spiral (or helical) ribs could then be present on the other rollers 27', 42, to insure a greater adherence of the motorised roller.

The present invention has been described only with reference to some particular embodiments. Several modifications could be made by a skilled person, without departing from the same inventive concept.

For example, the set of rollers that are mounted on the lower part of the rocker lever 1, must include at least two rollers, one of which, at least, has preferably spiral ribs (for stretching out the net immediately before its introduction in the baling chamber 34). Preferably, at least two rollers are biased by springs, one against the other, in order to grip the net in a more reliable manner, e.g. after the cutting operation (so as to insure the presence of the free end of the net). At least one roller may be motorised, in case the mutual spatial arrangement of the rocker lever I and the cutting device 5 do not allow to obtain a sufficient length for the free end to insure a dragging action (or even a mere contact) between the roller 36 and the net 3.

All rollers may be formed by a single material or coated with a different material (e.g. metal core and elastomeric or rubber coating). The actuator 23 could be replaced by any kind of driving mechanism. All these modifications are obviously within the reach of a skilled person and are included in the scope of the invention.

At last, we note that all four rollers (36, 37, 55 and 56) that delimit part of the bale formation chamber, are mounted on stationary axes, so that, except the rotation about their own axis, their spatial position is in fact invariable during the whole operation of the round baler and particularly during a wrapping cycle; therefore, the wrapping cycle may start with any diameter of the bale which occupies the interior of the bale formation chamber.

We note finally that the wrapping process according to the invention is not generally limited to the disclosed embodiments, for which there exist three positions of the dispensing device 1, and that, for instance, the net gripping position could (in an alternative embodiment) coincide with the operative position. In this case, if a brake is used, the latter should again touch the net on the storage coil 3, immediately after the net starts to be wrapped (condition shown in Fig. 2), in order to insure that the net remains stretched during wrapping (binding of the bale). In this solution, it is preferable that the brake be actuated by a separate mechanism of its own. Alternatively, the brake could constantly remain in the braking position, if the tie rod 19 is omitted.

## Claims

1. Round baler, including a wrapping device for wrapping a bale (33) with a net or any other similar wrapping means (3), comprising: a chamber (34) for the formation of a bale (33), which is bounded at least in part by rollers (36, 37; 55, 56), two of which (36, 37), consisting of a feed roller (36) and another roller (37), define a gap (38) used for feeding the wrapping means (3) into said chamber (34); a storage means (4) of the wrapping means (3); a dispensing device (1) of the wrapping means (3), which is movable between at least a first position, corresponding to a rest position, and a second position for gripping and feeding said wrapping means (3) inside said chamber (34); actuation means (23) for actuating said dispensing device (1); a cutting device (5), which is movable between a first position, corresponding to a rest position, and a second position, or cutting position; **characterised in that** said dispensing device (1) has first and second ends, and a set of rollers (26, 27; 26', 27', 42; 26", 27", 42") is mounted on said second end, which is used to grip a loose element (3") of the net, besides an element (39) which, in the second position of the dispensing device (1), abuts on the feed roller (36) together with the loose or free end of the net (3"), on the outer side of the feed roller, with respect to the chamber (34).

2. Round baler according to claim 1, wherein the contact between the net (3) and the surface of the feed roller (36), occurs at a point which is shifted with respect to the gap (38).

3. Round baler according to claim 1 or 2, wherein said feed roller (36) has ribs (40) in order to facilitate the gripping action on the loose end (3") and its feeding towards the gap (38), and therefore its insertion into the chamber (34).

4. Round baler according claim 3, wherein at least one roller (26; 26'; 26"; 27'; 42; 27", 42") of said group of rollers of the dispensing device (1), presents spiral ribs of opposite directions, that is left-hand and right-hand, which are apt to outstretch the net during the wrapping of the bale.

5. Round baler according to anyone of the preceding claims, wherein at least one roller (26'; 26"), making part of said group of rollers of the dispensing device (1), is motorised.

6. Round baler according to anyone of the preceding claims, wherein there are provided means (29; 44) which are suited to push one against the other at least two rollers (26, 27; 26', 27'; 42, 26') of said set of rollers of the dispensing device (1).

7. Round baler according to anyone of the preceding claims, wherein the said dispensing device (1) is formed by a rocker lever (1), which is connected at its first end, corresponding to the upper end, to the frame of the round baler, and is provided on this upper end with a plurality of transmission elements (2, 25, 24), and at least one (2) of these elements is idly mounted in order to perform the task of a net-length measuring roller (2) with the aid of a respective sensor.

8. Round baler according to claim 7, wherein the arrangement of said transmission elements (2, 25, 24) on the upper end of the rocker lever (1) is such as to insure, when the rocker lever (1) is in the second position and in the exact instant when it arrives in this position, the presence of a section of the net (41) which is slack.

9. Round baler according to claim 7, wherein also the net-length counting roller (2) has spiral ribs, in order to be capable of laterally outstretching the net which is partially wound around its surface.

10. Round baler according to anyone of the preceding claims, wherein an element (31) is provided on the dispensing device (1) in order to protect and guide the loose end (3") of the net towards the insertion gap (38).

11. Round baler according to claim 1, wherein said cutting device (5) is actuated by linkages or tie rods (7) that connect the same to said dispensing device (1).

12. Round baler according to claim 11, wherein a hooking-unhooking mechanism (9, 10, 13) is provided for said cutting device.

13. Round baler according to anyone of the preceding claims, wherein a brake (16) is provided which, in the first position of the dispensing device (1) is in contact with the wrapping means (3) on the storage means (4), while it withdraws from said wrapping means (3) during the initial period of the wrapping step, when said dispensing device (1) is in said second position.

14. Round baler according to claim 13, wherein said dispensing device (1) may also occupy a third position, which is determined by a sensor and is located between said first and second positions, and in which the cutting device (5) is still in said first position whilst the brake is again in touch with the wrapping means (3) on the storage means (4).

15. Round baler according to claim 14, wherein the brake (16) is urged by elastic means to return to its position in touch with the wrapping means (3) on the storage means (4), and is actuated by tie rods (19) which connect the same to the dispensing device (1).

16. A method for wrapping a bale, using a wrapping device of a round baler, the method including the following steps:
- providing a stock, or supply 3, of wrapping means, on a respective storage means (4) mounted on the round baler;
- providing a dispensing device (1) for said wrapping means (3), said dispensing device being movable between a first, or rest position, and a second or gripping position of the wrapping means (3), wherein the dispensing device (1) comprises a plurality of transmission elements (2, 24, 25) of said wrapping means (3), and a set of gripping rollers (26, 27; 26', 27', 42; 26", 27", 42") for gripping said wrapping means;
- guiding said wrapping means (3) from said storage means (4), around said transmission elements (2, 24, 25) and up to said gripping rollers (26, 27; 26', 27', 42; 26", 27", 42"), while letting a loose or free end (3") of the wrapping means (3) project from the latter rollers;
- displacing said dispensing device (1) from said first position to said second position, by the use of actuation means (23); wherein, in the second position of the dispensing device (1), an element (39), together with the free end (3"), abuts a first roller (36) of said chamber (34), which defines an insertion gap (38) in combination with a second roller (37) of the same chamber, and is used to insert the wrapping means (3) into the chamber (34);
- waiting until said loose end (3") is transported by said first roller (36) of the chamber, along a path extending around an outer portion of the roller's circumference, up to said insertion gap (38), and into the chamber (34);
- a wrapping step, in which the wrapping means (3) is drafted and wound around the bale (33) within the baling chamber (34) of the round baler;
- a cutting step, in which the wrapping means (3) is cut by a cutting device (5), after said dispensing device (1) has returned to its first position under the control of said actuation means (23).

17. A method according to claim 16, wherein the wrapping means (3) is outstretched in the transversal direction under the effect of at least one spiral-ribs-carrying-roller comprised in the group of gripping rollers (26, 27; 26', 27', 42; 26", 27", 42").

18. A method according to claim 17, wherein in order to facilitate the operation of transporting the wrapping means (3) towards the insertion gap (38), along said outer portion of the circumference of the first roller (36) of the baling chamber, a slack portion or non-tensioned portion (41) of the wrapping means (3) is generated during the displacement of the dispensing device (1) from the first position to the second position, and said first roller (36) of the baling chamber (34) takes advantage of this slack portion in order to draft the free end (3") towards the insertion gap (38) by overcoming a reduced or even negligible resistance.

19. A method according to claim 18, wherein said wrapping means (3) is also outstretched in the transversal direction by means of a net-length counting roller (2) carrying spiral ribs and included in said plurality of transmission elements (2, 24, 25).

20. A method according to anyone of claims 16 - 19, wherein at least one roller of the group of gripping rollers (26, 27; 26', 27', 42; 26", 27", 42") is motorised in order to increase the length of the free end (3") of the wrapping means (3), during the displacement of the dispensing device (1) from said first position to said second position.

21. A method according to anyone of claims 16 - 20, wherein a brake (16) is provided, which abuts on the supply (3) of wrapping means (3) when said dispensing device (1) is in the first position, in order to tension or outstretch said wrapping means (3), but which is no more in touch with said supply (3) of the wrapping means when said dispensing device (1) reaches said second position.

22. A method according to anyone of the preceding claims 19-21, wherein, immediately after the wrapping means (3) has traversed the insertion gap (38) and begins to the wound around the lateral cylindrical surface of the bale (33), a sensor associated to said net length counting roller (2) transmits a control signal to an electronic control unit, which in turn controls the actuation means (23) of the dispensing device (1), so that the latter is brought to a third position, corresponding to an operative or working position, intermediate between said first position and said second position.

23. A method according to anyone of the claims 16 to 22, wherein said cutting device (5) and said brake (16) are at least in part actuated by linkages (7, 19) which connect them to said dispensing device (1).

24. A method according to anyone of claims 16 - 23, wherein the dispensing device is a rocker lever (1) comprising two arms (1, 1) pivoted to the frame (47) of the round baler.

25. A method according to claim 24, wherein said net length counting roller (2) is coaxial with the rotational axis of the rocker lever (1).

26. A method according to anyone of the claims 16-20, wherein a brake (16) is provided, which uninterruptedly abuts on the wrapping material supply (3).

27. A method according to claim 17, wherein the spiral ribs of the spiralled rollers may also be obtained without adding material, but simply by removing material from the rollers themselves.

## Patentansprüche

1. Rundballenpresse, die eine Umhüllungsvorrichtung zum Umhüllen eines Ballens (33) mit einem Netz oder einem beliebigen anderen ähnlichen Umhüllungsmittel (3) umfasst, aufweisend: eine Kammer (34) zur Ausformung eines Ballens (33), die mindestens zum Teil durch Rollen begrenzt (36, 37; 55, 56) ist, von denen zwei (36, 37), bestehend aus einer Zuführungsrolle (36) und einer anderen Rolle (37), eine Aussparung (38) definieren, die zum Zuführen des Umhüllungsmittels (3) in die Kammer (34) verwendet wird; ein Aufbewahrungsmittel (4) für das Umhüllungsmittel (3); eine Spendervorrichtung (1) für das Umhüllungsmittels (3), die bewegbar ist zwischen mindestens einer ersten Position, die einer Ruheposition entspricht, und einer zweiten Position zum Ergreifen und Zuführen des Umhüllungsmittels (3) in das Innere der Kammer (34); Betätigungsmittel (23) zum Betätigen der Spendervorrichtung (1); eine Schneidevorrichtung (5), die zwischen einer ersten Position, die einer Ruheposition entspricht, und einer zweiten Position oder Schneideposition bewegbar ist; **dadurch gekennzeichnet, dass** die Spendervorrichtung (1) erste und zweite Enden aufweist und eine Reihe von Rollen (26, 27; 26', 27', 42; 26", 27", 42") an dem zweiten Ende befestigt ist, das verwendet wird, um eine lose Komponente (3") des Netzes zu ergreifen neben einer Komponente (39), die, in der zweiten Position der Spendervorrichtung (1), zusammen mit dem losen oder freien Ende des Netzes (3") in Bezug auf die Kammer (34) auf der äußeren Seite der Zuführungsrolle (36) an der Zuführungsrolle (36) anliegt.

2. Rundballenpresse gemäß Anspruch 1, wobei der Kontakt zwischen dem Netz (3) und der Oberfläche der Zuführungsrolle (36) an einem Punkt auftritt, der in Bezug auf die Aussparung (38) versetzt ist.

3. Rundballenpresse gemäß Anspruch 1 oder 2, wobei die Zuführungsrolle (36) Rippen (40) aufweist, um den Vorgang des Ergreifens am losen Ende (3") und dessen Zuführung in Richtung der Aussparung (38) und deshalb dessen Eintrag in die Kammer (34) zu erleichtern.

4. Rundballenpresse gemäß Anspruch 3, wobei mindestens eine Rolle (26; 26'; 26"; 27'; 42; 27", 42") aus der Gruppe von Rollen der Spendervorrichtung (1) in entgegen gesetzten Richtungen angeordnete spiralförmige Rippen aufweist, das heißt linksgängige und rechtsgängige, die dazu geeignet sind das Netz während des Umhüllens des Ballens zu strecken.

5. Rundballenpresse gemäß jedem der vorherigen Ansprüche, wobei mindestens eine Rolle (26'; 26"), die Teil der Gruppe von Rollen der Spendervorrichtung (1) ausmacht, motorisiert ist.

6. Rundballenpresse gemäß jedem der vorherigen Ansprüche, wobei darin Mittel (29; 44) zur Verfügung gestellt sind, die geeignet sind, um mindestens zwei Rollen (26, 27; 26', 27'; 42, 26') aus der Reihe von Rollen der Spendervorrichtung (1) gegeneinander zu drücken.

7. Rundballenpresse gemäß jedem der vorherigen Ansprüche, wobei die Spendervorrichtung (1) durch einen Kipphebel (1) ausgeformt ist, der an seinem ersten Ende, das dem oberen Ende entspricht, mit dem Rahmen der Rundballenpresse verbunden ist, und auf diesem oberen Ende mit einer Vielzahl von Transmissionselementen (2, 25, 24) versehen ist, und mindestens eines (2) dieser Elemente freilaufend befestigt ist, um mit Hilfe eines entsprechenden Sensors die Aufgabe einer Netzlängenmessrolle (2) auszuführen.

8. Rundballenpresse gemäß Anspruch 7, wobei die Anordnung der Transmissionselemente (2, 25, 24) am oberen Ende des Kipphebels (1) so ausgeführt ist, um, wenn der Kipphebel (1) in der zweiten Position ist und genau in dem Moment, wenn er in dieser Position ankommt, das Vorhandensein eines Abschnitts des Netzes (41) sicherzustellen, der locker ist.

9. Rundballenpresse gemäß Anspruch 7, wobei auch die Netzlängenmessrolle (2) spiralförmige Rippen aufweist, um dazu in der Lage zu sein, das Netz, das teilweise um ihre Oberfläche herum gewickelt ist, lateral zu strecken.

10. Rundballenpresse gemäß jedem der vorherigen Ansprüche, wobei ein Element (31) auf der Spendervorrichtung (1) zur Verfügung gestellt ist, um das lose Ende (3") des Netzes zu schützen und in Richtung der Zuführungsaussparung (38) zu führen.

11. Rundballenpresse gemäß Anspruch 1, wobei die Schneidevorrichtung (5) durch Anlenkungen oder Zugstangen (7) betätigt wird, die diese mit der Spendervorrichtung (1) verbinden.

12. Rundballenpresse gemäß Anspruch 11, wobei ein Einhänge/Aushänge-Mechanismus (9, 10, 13) für die Schneidevorrichtung zur Verfügung gestellt wird.

13. Rundballenpresse gemäß jedem der vorherigen Ansprüche, wobei eine Bremse (16) zur Verfügung gestellt ist, die in der ersten Position der Spendervorrichtung (1) in Kontakt mit dem Umhüllungsmittel (3) auf dem Aufbewahrungsmittel (4) ist, während sie sich während der Anfangszeit des Umhüllungsschritts von dem Umhüllungsmittel (3) zurückzieht, wenn die Spendervorrichtung (1) in der zweiten Position ist.

14. Rundballenpresse gemäß Anspruch 13, wobei die Spendervorrichtung (1) auch eine dritte Position einnehmen kann, die durch einen Sensor bestimmt wird und zwischen den ersten und zweiten Positionen angeordnet ist und in der die Schneidevorrichtung (5) immer noch in der ersten Position ist, während die Bremse wieder in Kontakt mit dem Umhüllungsmittel (3) auf dem Aufbewahrungsmittel (4) ist.

15. Rundballenpresse gemäß Anspruch 14, wobei die Bremse (16) durch elastische Mittel dazu gedrängt wird in ihre Position in Kontakt mit dem Umhüllungsmittel (3) auf dem Aufbewahrungsmittel (4) zurückzukehren, und durch Zugstangen (19) betätigt wird, die diese mit der Spendervorrichtung (1) verbinden.

16. Verfahren zur Umhüllung eines Ballens unter Verwendung einer Umhüllungsvorrichtung einer Rundballenpresse, wobei das Verfahren die folgenden Schritte aufweist:
Bereitstellen eines Vorrats oder einer Bevorratung 3 von Umhüllungsmittel auf einem entsprechenden auf der Rundballenpresse befestigten Aufbewahrungsmittel (4);
Bereitstellen eine Spendervorrichtung (1) für das Umhüllungsmittel (3), wobei die Spendervorrichtung zwischen einer ersten oder Ruheposition und einer zweiten oder Ergreifungsposition des Umhüllungsmittels (3) bewegbar ist, wobei die Spendervorrichtung (1) eine Vielzahl von Transmissionselementen (2, 24, 25) dieses Umhüllungsmittels (3) und eine Reihe von Klemmrollen (26, 27; 26', 27', 42; 26", 27", 42") zum Ergreifen des Umhüllungsmittels aufweist;
Führen des Umhüllungsmittels (3) vom Aufbewahrungsmittel (4) um die Transmissionselemente (2, 24, 25) herum und bis zu den Klemmrollen (26, 27; 26', 27', 42; 26", 27", 42"), während eine loses oder freies Ende (3") des Umhüllungsmittels (3) aus letzteren Rollen überstehen gelassen wird;
Verschieben der Spendervorrichtung (1) von der ersten Position in die zweite Position durch die Verwendung von Betätigungsmitteln (23); wobei in der zweiten Position der Spendervorrichtung (1) eine Komponente (39) zusammen mit dem freien Ende (3") mit einer ersten Rolle (36) der Kammer (34) aneinander stößt, wodurch in Verbindung mit einer zweiten Rolle (37) derselben Kammer eine Zuführungsaussparung (38) definiert und verwendet wird, um das Umhüllungsmittel (3) in die Kammer (34) einzuführen;
Warten, bis das lose Ende (3") von der ersten Rolle (36) der Kammer entlang eines Wegs transportiert wird, der sich um einen äußeren Teilbereich des Umfangs der Rolle herum bis zur Zuführungsaussparung (38) und in die Kammer (34) erstreckt;
einen Umhüllungsschritt, in dem das Umhüllungsmittel (3) innerhalb der Ballenkammer (34) der Rundballenpresse um den Ballen (33) herum gezogen und gewickelt wird;
einen Schneideschritt, in dem das Umhüllungsmittel (3) durch eine Schneidevorrichtung (5) abgeschnitten wird, nachdem die Spendervorrichtung (1) unter der Steuerung des Betätigungsmittels (23) in ihre erste Position zurückgekehrt ist.

17. Verfahren gemäß Anspruch 16, wobei das Umhüllungsmittel (3) unter der Wirkung von mindestens einer spiralförmige Rippen aufweisenden Rolle, die in der Gruppe von Klemmrollen (26, 27; 26', 27', 42; 26", 27", 42") enthalten ist, in der transversalen Richtung gestreckt wird.

18. Verfahren gemäß Anspruch 17, wobei, um den Betrieb des Transportierens des Umhüllungsmittels (3) in Richtung der Einführungsaussparung (38) entlang des äußeren Teilbereichs des Umfangs der ersten Rolle (36) der Ballenkammer zu erleichtern, während der Verschiebung der Spendervorrichtung (1) von der ersten Position zu der zweiten Position ein lockerer Teilbereich oder nicht gespannter Teilbereich (41) des Umhüllungsmittels (3) erzeugt wird und die erstes Rolle (36) der Ballenkammer (34) diesen lockeren Teilbereich vorteilhaft verwendet, um das freie Ende (3") in Richtung der Einführungsaussparung (38) zu ziehen, in dem sie einen reduzierten oder sogar vernachlässigbaren Widerstand überwindet.

19. Verfahren gemäß Anspruch 18, wobei das Umhüllungsmittel (3) auch in der transversalen Richtung mittels einer Netzlängenmessrolle (2) gestreckt wird, die spiralförmige Rippen aufweist und die in der Vielzahl von Transmissionselementen (2, 24, 25) enthalten ist.

20. Verfahren gemäß jedem der Ansprüche 16 bis 19, wobei mindestens eine Rolle aus der Gruppe der Klemmrollen (26, 27; 26', 27', 42; 26", 27", 42") motorisiert ist, um die Länge des freie Endes (3") des Umhüllungsmittels (3) während der Verschiebung der Spendervorrichtung (1) von der ersten Position in die zweite Position zu erhöhen.

21. Verfahren gemäß jedem der Ansprüche 16 bis 20, wobei eine Bremse (16) zur Verfügung gestellt wird, die an der Bevorratung (3) des Umhüllungsmittels (3) anliegt, wenn die Spendervorrichtung (1) in der ersten Position ist, um das Umhüllungsmittel (3) zu spannen oder zu strecken, die aber nicht mehr in Kontakt mit der Bevorratung (3) des Umhüllungsmittels ist, wenn die Spendervorrichtung (1) die zweite Position erreicht.

22. Verfahren gemäß jedem der vorherigen Ansprüche 19 bis 21, wobei sofort nachdem das Umhüllungsmittel (3) die Zuführungsaussparung (38) durchquert hat und beginnt, sich um die laterale zylindrische Oberfläche des Ballens (33) herumzuwickeln, ein Sensor, der der Netzlängenmessrolle (2) zugeordnet ist, ein Steuersignal an eine elektronische Steuereinheit sendet, die wiederum das Betätigungsmittel (23) der Spendervorrichtung (1) steuert, so dass Letztere in eine dritte Position gebracht wird, die einer aktiven oder Arbeitsposition in der Mitte zwischen der ersten Position und der zweiten Position entspricht.

23. Verfahren gemäß jedem der Ansprüche 16 bis 22, wobei die Schneidevorrichtung (5) und die Bremse (16) mindestens zum Teil durch Anlenkungen (7, 19) betätigt werden, die sie mit der Spendervorrichtung (1) verbinden.

24. Verfahren gemäß jedem der Ansprüche 16 bis 23, wobei die Spendervorrichtung ein Kipphebel (1) ist, der zwei Arme (1, 1) aufweist, die drehbar am Rahmen (47) der der Rundballenpresse gelagert sind.

25. Verfahren gemäß Anspruch 24, wobei die Netzlängenmessrolle (2) koaxial zu der Drehachse des Kipphebels (1) ist.

26. Verfahren gemäß jedem der Ansprüche 16 bis 20, wobei eine Bremse (16) zur Verfügung gestellt wird, die ununterbrochen an der Bereitstellung des Umhüllungsmaterials (3) anliegt.

27. Verfahren gemäß Anspruch 17, wobei die Spiralrippen der spiralförmigen Rollen auch erzielt werden können ohne Material hinzuzufügen, einfach nur durch Entfernen von Material von den Rollen selbst.

## Revendications

1. Ramasseuse-presse à balles rondes comportant un dispositif d'enveloppement pour envelopper une balle (33) à l'aide d'un filet ou de n'importe quel autre moyen d'enveloppement similaire (3), comprenant : une chambre (34) pour la formation d'une balle (33), qui est délimitée au moins en partie par des rouleaux (36, 37 ; 55, 56) parmi lesquels deux rouleaux (36, 37), un rouleau d'alimentation (36) et un autre rouleau (37), définissent un interstice (38) qui sert à l'amenée du moyen d'enveloppement (3) dans la chambre (34) ; un moyen de stockage (4) pour le moyen d'enveloppement (3) ; un distributeur (1) pour le moyen d'enveloppement (3), qui est mobile entre au moins une première position correspondant à une position de repos, et une deuxième position pour la préhension et l'amenée du moyen d'enveloppement (3) dans la chambre (34) ; des moyens d'actionnement (23) pour actionner le distributeur (1) ; et un dispositif de coupe (5) qui est mobile entre une première position correspondant à une position de repos, et une seconde position ou position de coupe ;
**caractérisée en ce que** le distributeur (1) a des première et seconde extrémités, et une série de rouleaux (26, 27 ; 26', 27', 42 ; 26", 27", 42") sont montés sur la seconde extrémité et servent à prendre un élément lâche (3") du filet, en plus d'un élément (39) qui, dans la deuxième position du distributeur (1), bute sur le rouleau d'amenée (36) avec l'extrémité lâche ou libre du filet (3"), sur le côté extérieur du rouleau d'amenée, par rapport à la chambre (34).

2. Ramasseuse-presse à balles rondes selon la revendication 1, dans laquelle le contact entre le filet (3) et la surface du rouleau d'amenée (36) se fait à un point qui est décalé par rapport à l'interstice (38).

3. Ramasseuse-presse à balles rondes selon la revendication 1 ou 2, dans laquelle le rouleau d'amenée (36) a des nervures (40) afin de faciliter l'action de préhension sur l'extrémité lâche (3") et l'amenée de celle-ci vers l'interstice (38), et par conséquent son introduction dans la chambre (34).

4. Ramasseuse-presse à balles rondes selon la revendication 3, dans laquelle au moins un rouleau (26 ; 26' ; 26" ; 27' ; 42 ; 27", 42") du groupe de rouleaux du distributeur (1) présente des nervures en spirale de sens opposés, c'est-à-dire dirigées vers la gauche et vers la droite, qui sont aptes à tendre le filet pendant l'enveloppement de la balle.

5. Ramasseuse-presse à balles rondes selon l'une quelconque des revendications précédentes, dans laquelle au moins un rouleau (26' ; 26") qui fait partie du groupe de rouleaux du distributeur (1) est motorisé.

6. Ramasseuse-presse à balles rondes selon l'une quelconque des revendications précédentes, dans laquelle il est prévu des moyens (29 ; 44) qui sont aptes à pousser l'un contre l'autre au moins deux rouleaux (26, 27 ; 26', 27' ; 42, 26') de la série de rouleaux du distributeur (1).

7. Ramasseuse-presse à balles rondes selon l'une quelconque des revendications précédentes, dans laquelle le distributeur (1) est formé par un levier oscillant (1) qui est relié, à sa première extrémité qui correspond à l'extrémité supérieure, au châssis de la ramasseuse-presse et qui est pourvu à cette extrémité supérieure de plusieurs éléments de transmission (2, 25, 24), et l'un (2) au moins de ces éléments est monté librement afin de remplir la fonction d'un rouleau de mesure de longueur de filet (2) à l'aide d'un capteur respectif.

8. Ramasseuse-presse à balles rondes selon la revendication 7, dans laquelle la disposition des éléments de transmission (2, 25, 24) sur l'extrémité supérieure du levier oscillant (1) est prévue de manière à garantir, quand le levier oscillant (1) est dans la seconde position et au moment précis où il arrive dans cette position, la présence d'une partie du filet (41) qui est lâche.

9. Ramasseuse-presse à balles rondes selon la revendication 7, dans laquelle le rouleau de mesure de longueur de filet (2) a des nervures en spirale afin d'être apte à tendre latéralement le filet qui est en partie enroulé sur sa surface.

10. Ramasseuse-presse à balles rondes selon l'une des revendications précédentes, dans laquelle un élément (31) est prévu sur le distributeur (1) afin de protéger et de guider l'extrémité lâche (3") du filet vers l'interstice d'introduction (38).

11. Ramasseuse-presse à balles rondes selon la revendication 1, dans laquelle le dispositif de coupe (5) est actionné par des liaisons ou des tiges de raccordement (7) qui le relient au distributeur (1).

12. Ramasseuse-presse à balles rondes selon la revendication 11, dans laquelle un mécanisme d'accrochage-décrochage (9, 10, 13) est prévu pour le dispositif de coupe.

13. Ramasseuse-presse à balles rondes selon l'une des revendications précédentes, dans laquelle il est prévu un frein (16) qui, dans la première position du distributeur (1), est en contact avec le moyen d'enveloppement (3) prévu sur le moyen de stockage (4), tandis qu'il se retire dudit moyen d'enveloppement (3) pendant la période initiale de la phase d'enveloppement, quand le distributeur (1) est dans sa deuxième position.

14. Ramasseuse-presse à balles rondes selon la revendication 13, dans laquelle le distributeur (1) peut aussi occuper une troisième position, déterminée par un capteur et située entre la première et la deuxième position, dans laquelle le dispositif de coupe (5) est toujours dans la première position tandis que le frein est à nouveau en contact avec le moyen d'enveloppement (3) sur le moyen de stockage (4).

15. Ramasseuse-presse à balles rondes selon la revendication 14, dans laquelle le frein (16) est poussé par un moyen élastique pour revenir à sa position en contact avec le moyen d'enveloppement (3) sur le moyen de stockage (4), et est actionné par des tiges de raccordement (19) qui le relient au distributeur (1).

16. Méthode pour envelopper une balle à l'aide d'un dispositif d'enveloppement d'une rammasseuse-presse à balles rondes, comprenant les étapes qui consistent à :
- prévoir une réserve ou une provision (3) de moyen d'enveloppement sur un moyen de stockage respectif (4) monté sur ladite ramasseuse-presse ;
- prévoir un distributeur (1) pour le dispositif d'enveloppement (3), ce distributeur étant mobile entre une première position, ou position de repos, et une deuxième position, ou position de préhension, du moyen d'enveloppement (3), et comprenant plusieurs éléments de transmission (2, 24, 25) du moyen d'enveloppement (3) et une série de rouleaux de préhension (26, 27 ; 26', 27', 42 ; 26", 27", 42") pour prendre le moyen d'enveloppement ;
- guider le moyen d'enveloppement (3) à partir du moyen de stockage (4), sur les éléments de transmission (2, 24, 25) et jusqu'aux rouleaux de préhension (26, 27 ; 26', 27', 42 ; 26", 27", 42") tout en laissant une extrémité lâche ou libre (3") du moyen d'enveloppement (3) dépasser desdits rouleaux ;
- faire passer le distributeur (1) de sa première position à sa deuxième position à l'aide du moyen d'actionnement (23) ; étant précisé que dans la deuxième position du distributeur (1), un élément (39) avec l'extrémité libre (3") bute contre un premier rouleau (36) de la chambre (34) qui définit un interstice d'introduction (38) avec un second rouleau (37) de ladite chambre, et sert à introduire le moyen d'enveloppement (3) dans la chambre (34) ;
- attendre que l'extrémité lâche (3") soit transportée par le premier rouleau (36) de la chambre le long d'une trajectoire qui passe sur une partie extérieure de la circonférence du rouleau, qui remonte dans l'interstice d'introduction (38) et qui entre dans la chambre (34) ;
- une étape d'enveloppement lors de laquelle le moyen d'enveloppement (3) est étiré et enroulé autour de la balle (33) qui se trouve dans la chambre de formation de balle (34) de la ramasseuse-presse à balles rondes ;
- une étape de coupe lors de laquelle le moyen d'enveloppement (3) est coupé par un dispositif de coupe (5) après que le distributeur (1) est retourné à sa première position grâce à la commande du moyen d'actionnement (23).

17. Méthode selon la revendication 16, selon laquelle le moyen d'enveloppement (3) est tendu dans le sens transversal sous l'action d'au moins un rouleau à nervures en spirales prévu dans le groupe de rouleaux de préhension (26, 27 ; 26', 27', 42 ; 26", 27", 42").

18. Méthode selon la revendication 17, selon laquelle pour faciliter l'opération de transport du moyen d'enveloppement (3) vers l'interstice d'introduction (38) le long de ladite partie extérieure de la circonférence du premier rouleau (36) de la chambre de formation de balle, une partie détendue ou non tendue (41) du moyen d'enveloppement (3) est produite pendant le déplacement du distributeur (1) de la première à la deuxième position, et le premier rouleau (36) de la chambre (34) profite de cette partie détendue pour tirer l'extrémité libre (3") vers l'interstice d'introduction (38) en surmontant une résistance réduite, voire négligeable.

19. Méthode selon la revendication 18, selon laquelle le moyen d'enveloppement (3) est également tendu dans le sens transversal grâce à un rouleau de mesure de longueur de filet (2) qui porte des nervures en spirale et qui fait partie des éléments de transmission (2, 24, 25).

20. Méthode selon l'une quelconque des revendications 16 à 19, selon laquelle au moins un rouleau du groupe de rouleaux de préhension (26, 27 ; 26', 27', 42 ; 26", 27", 42") est motorisé afin d'augmenter la longueur de l'extrémité libre (3") du moyen d'enveloppement (3) pendant le déplacement du distributeur (1) de la première vers la deuxième position.

21. Méthode selon l'une quelconque des revendications 16 à 20, selon laquelle il est prévu un frein (16) qui bute sur la réserve (3) de moyen d'enveloppement (3) quand le distributeur (1) est dans sa première position, afin de tendre ou d'étirer le moyen d'enveloppement (3), mais qui n'est plus en contact avec ladite réserve (3) du moyen d'enveloppement quand le distributeur (1) atteint sa deuxième position.

22. Méthode selon l'une quelconque des revendications précédentes 19 à 21, selon laquelle juste après que le moyen d'enveloppement (3) a traversé l'interstice d'introduction (38) et qu'il commence à s'enrouler sur la surface cylindrique latérale de la balle (33), un capteur associé au rouleau de mesure de longueur de filet (2) transmet un signal de commande à une unité de commande électronique, qui commande à son tour le moyen d'actionnement (23) du distributeur (1), de sorte que ce dernier est amené dans une troisième position, correspondant à une position de fonctionnement ou de travail, qui est située entre la première et la deuxième position.

23. Méthode selon l'une quelconque des revendications 16 à 22, selon laquelle le dispositif de coupe (5) et le frein (16) sont au moins en partie actionnés par des liaisons (7, 19) qui les relient au distributeur (1).

24. Méthode selon l'une quelconque des revendications 16 à 23, selon laquelle le distributeur est constitué par un levier oscillant (1) qui comprend deux bras (1, 1) reliés, pivotants, au châssis (47) de la ramasseuse-presse à balles rondes.

25. Méthode selon la revendication 24, selon laquelle le rouleau compteur de longueur de filet (2) est coaxial par rapport à l'axe de rotation du levier oscillant (1).

26. Méthode selon l'une quelconque des revendications 16 à 20, selon laquelle il est prévu un frein (16) qui bute sans interruption sur la réserve de matériau d'enveloppement (3).

27. Méthode selon la revendication 17, selon laquelle on peut aussi obtenir les nervures en spirale des rouleaux à spirales sans ajouter de matière, mais simplement en enlevant de la matière sur les rouleaux eux-mêmes.
